# EUROPEAN PATENT APPLICATION

(11) **EP 1 933 432 A1**
(43) Date of publication of application: **18.06.2008**
(21) Application number: 06797854.4
(22) Date of filing: 12.09.2006
(51) Int. Cl.: H02B 13/055, H01H 33/22, H02B 13/02

(54) **GAS-INSULATED SWITCHING DEVICE AND GAS CIRCUIT BREAKER**

(30) Priority: 15.09.2005 JP 2005268058; 30.05.2006 JP 2006150014
(71) Applicant: Tokyo Denki University, Chiyoda-ku, Tokyo 101-8457 (JP); Tosoh F-Tech, Inc., Shunan-shi, Yamaguchi 746-0006 (JP)
(72) Inventor: YANABU, Satoru, TOKYO DENKI UNIVERSITY, Tokyo 1018457 (JP); ODAKA, Hiromi, TOKYO DENKI UNIVERSITY, Tokyo 1018457 (JP)
(74) Representative: Vossius & Partner
(86) International application number: PCT/JP2006/318062
(87) International publication number: WO 2007/032344

(57) **Abstract**

A gas insulated switchgear is provided which uses an SF₆ substitute gas as an insulating gas and thus causes reduced environmental load while achieving high dielectric strength and excellent interrupting performance.

The gas insulated switchgear includes a switchgear housed in a container filled with an insulating gas. The insulating gas contains CF₃I and CO₂ with CF₃I present at a pressure ratio of 15% or more

## Description

### TECHNICAL FIELD

The present invention relates to a gas insulated switchgear and a gas circuit breaker that use a substitute gas for sulfur hexafluoride (SF₆), specifically a trifluoroiodomethane (CF₃I) gas, as an insulating gas.

### BACKGROUND ART

SF₆ gas is widely used as an insulating gas in gas insulated switchgears, especially in gas circuit breakers. SF₆ gas is not only an effective insulator, but the gas, being nontoxic, harmless and inert, also has many favorable properties that make it ideal for use in industrial applications. Due to its extremely high global warming potential of 23,900 (relative to CO₂, the effect over 100 years), however, SF₆ gas was designated as a greenhouse gas at the 1997 third Conference of Parties in Kyoto (COP3) : Effort has been made to reduce its emission since then. Finding a substitute gas for SF₆ is an important issue for environmental protection.

One known substitute gas for SF₆ is CF₃I, which has a low global warming potential of 5 or less and a very low ozone depletion potential and can therefore reduce environmental load. While CF₃I has a high boiling point that hampers its use in practical applications, the boiling point can be lowered by mixing it with other gases at predetermined partial pressures.

In a gas insulated electrical apparatus disclosed in Patent Document 1, different insulation gases are sealed in the switchgear and in the current path. A mixed gas containing CF₃I is sealed in the current path.
Patent Document 1 Japanese Patent Application Laid-Open No. 2000-164040

### DISCLOSURE OF THE INVENTION

### PROBLEMS TO BE SOLVED BY THE INVENTION

While dielectric strength and interrupting performance are two important requirements for an insulating gas, the latter property has rarely been considered in evaluating substitute gases for SF₆. Although Patent Document 1 describes dielectric strength as a requirement for gas insulated switchgears, nothing is mentioned about the interrupting performance in relation to circuit breakers.

Having excellent dielectric strength and rapid arc quenching property, SF₆ gas also shows high interrupting performance. All of these properties must therefore be considered in the search for substitute gases for SF₆.

Accordingly, it is an obj ect of the present invention to provide a gas insulated switchgear and a gas circuit breaker that use an SF₆ substitute gas as an insulating gas and thus cause reduced environmental load while achieving high dielectric strength and excellent interrupting performance.

### MEANS FOR SOLVING THE PROBLEMS

To achieve the foregoing object, the present inventors have drawn attention to the interrupting performance of various types of gases, including CO₂ and H₂, and found that CF₃I, a gas known to cause small environmental load and have high dielectric strength, also shows excellent interrupting performance. The present inventors have also found that a combination of CF₃I and CO₂ has an optimum boiling point and shows particularly high interrupting performance. These findings ultimately led to the development of the gas insulated switchgear and the gas circuit breaker of the present invention.

Specifically, the present invention provides the following aspects:
(1) a gas insulated switchgear, including a switchgear housed in a container filled with an insulating gas, wherein the insulating gas contains CF₃I and CO₂ with CF₃I present at a pressure ratio of 15% or more;
(2) the gas insulated switchgear according to (1), wherein CF₃I is present at a pressure ratio of 40% or more;
(3) the gas insulated switchgear according to (1) or (2), wherein CF₃I is present at a partial pressure of 0.2 MPa or less;
(4) a gas circuit breaker that uses an insulating gas for interrupting a current path, wherein the insulating gas contains CF₃I and CO₂ with CF₃I present at a pressure ratio of 15% or more;
(5) the gas circuit breaker according to (4), wherein CF₃I is present at a pressure ratio of 40% or more; and
(6) the gas circuit breaker according to (4) or (5), wherein CF₃I is present at a partial pressure of 0.2 MPa or less.

### EFFECT OF THE PRESENT INVENTION

The present invention provides a gas insulated switchgear and a gas circuit breaker that use as an SF₆ substitute gas as an insulating gas and thus cause reduced environmental load while achieving high dielectric strength and excellent interrupting performance.

### BRIEF DESCRIPTION OF THE DRAWINGS

Fig. 1 is a schematic diagram of a gas insulated switchgear in one embodiment of the present invention.
Fig. 2 is a graph showing the di/dt-dv/dt characteristics of different gases at 0.2 MPa in one embodiment of the present invention.
Fig. 3 is a schematic diagram of an experimental setup in one embodiment of the present invention.
Fig. 4 is a schematic diagram of an experimental circuit in one embodiment of the present invention.
Fig. 5 is a graph showing waveforms of current and voltage near the zero-current point in one embodiment of the present invention.
Fig. 6 is a graph showing the di/dt-dv/dt characteristics of CF₃I gas at 0.2 MPa in one embodiment of the present invention.
Fig. 7 is a graph showing the di/dt-dv/dt characteristics of a mixed gas of CF₃I-CO₂ at 0.2 MPa in one embodiment of the present invention.
Fig. 8 is a graph showing the change in the SLF-interrupting performance against the pressure ratio of CF₃I in a mixed gas of CF₃I-CO₂ at 0.2 MPa in one embodiment of the present invention.

### DESCRIPTION OF REFERENCE NUMERALS

- 1: Upstream container
- 2: Static contactor
- 3: Movable contactor
- 4: Spring
- 5: Nozzle
- 6: Vacuum tank
- 7: Vacuum pump
- 8: Reserve tank
- 10: Experimental setup
- 11: Gas circuit breaker
- 12: Line-side disconnecting switch
- 13: Bus-side disconnecting switch
- 14: Line-side ground device
- 15: Ground device
- 16: Instrument transformer
- 17: Current transformer
- 18: Cable connector
- 19: Bus
- 20: Gas insulated switchgear

### BEST MODE FOR CARRYING OUT THE INVENTION

The present invention will now be described with reference to examples, which are not intended to limit the scope of the invention in any way.

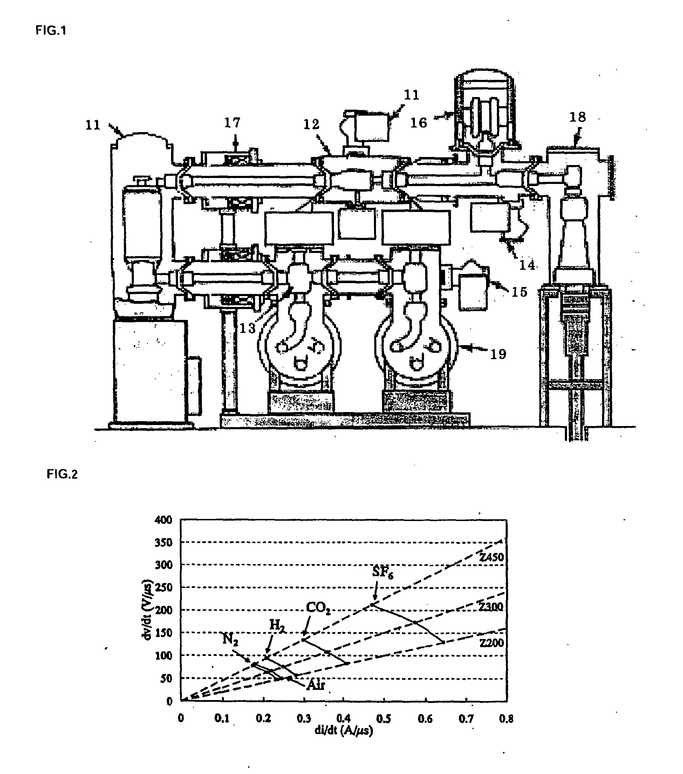

The present invention may be applied to any type of gas insulated switchgear that is housed in a container filled with an insulator gas. One example of such a gas insulated switchgear is shown in Fig. 1. In a gas insulated switchgear 20 shown in Fig. 1, a circuit breaker 11 is used to quickly separate the sites of ground short circuits or short circuits occurring in an electrical power system to protect the series-connected devices from failure or damage. A line-side disconnecting switch 12 and a bus-side disconnecting switch 13 connect or disconnect the current path. A line-side ground device 14 and a ground device 15 ground conductors in a zero-voltage state during inspection and maintenance to ensure safety. An instrument transformer 16 and a current transformer 17 measure and detect voltage and current. A cable connector 18 connects cables. A bus 19 is used to connect or switch between lines and switch between systems. These devices are integrally constructed as a switchgear. The switchgear is housed in a container and the container is sealed and filled with an insulating gas. This switchgear can be used to separate or insulate electrical devices. The present invention may also be applied to any type of gas circuit breaker that uses an insulating gas to interrupt the current path. For example, a circuit breaker 11 shown in Fig. 1 may be used as an independent gas circuit breaker. In this instance, a high interrupting performance of an insulating gas is particularly required. By using the insulating gas of the present invention, the interrupting performance of the circuit breaker can be improved.

The insulating gas of the present invention contains CF₃I and CO₂ with CF₃I present at a pressure ratio of 15% or more.

An insulating gas is required to have not only high dielectric strength, but also high interrupting performance. Interrupting performance can include different properties such as insulation recovery characteristics upon breaker terminal fault (BTF) interruption and insusceptibility to thermal breakage upon short line fault (SLF) interruption. In BTF, while the rate of increase in the transient recovery voltage after the current interruption is low, the transient recovery voltage is high. This causes insulative reignition of arc. In this case, it is important that the insulating gas has high dielectric strength. In SLF, in comparison, high frequency oscillation superposes restriking voltage. As a result, the rate of increase in transient recovery voltage immediately following the zero-current point becomes extremely high, causing thermal reignition of arc. In this case, the arc conductivity must decrease rapidly near the zero-current point.

In the present invention, it has been discovered that CF₃I gas has SLF interruption performance comparable to SF₆ gas as current-interrupting performance. Further, the dielectric strength of CF₃I gas at 0.1 MPa (absolute pressure, all pressures are given in absolute pressures in the following) is 1.2 times or higher than that of SF₆ gas. In addition, CF₃I is a colorless, odorless and inert gas that has a global warming potential (GWP) of 5 or less and an extremely small ozone depletion potential (ODP) of 0.0001. Thus, CF₃I causes little environmental load. Having excellent interrupting performance and high dielectric strength and posing little environmental load, CF₃I gas serves as a suitable substitute for SF₆ gas.

However, CF₃I has a high boiling point of -22.5°C at atmospheric pressure (approx. 0.1 MPa). Conventional insulated switchgears are operated with SF₆ gas filled at 0.5 MPa. At 0.5 MPa, the boiling point of CF₃I is 20°C or above, which makes it difficult to use CF₃I in a gas insulated switchgear or a gas circuit breaker. One approach to this problem is to mix CF₃I gas with other gases at predetermined partial pressures to lower the boiling point of CF₃I.

The present inventors examined the interrupting performance of mixed gases of CF₃I gas and other gases and found that mixed gases of CF₃I and CO₂ had particularly high interrupting performance. The present inventors also found the optimum range for the mixing ratio of CF₃I.

Of different SF₆ substitute gases, CO₂ has particularly high interrupting performance. As shown by the results of Fig. 2, the interrupting performance of CO₂ is higher than that of N₂, air or H₂. While N₂ or air may be mixed with CF₃I, their interrupting performances are lower than CO₂. Thus, CO₂ can be mixed with CF₃I to make a mixed gas having higher interrupting performance than those made by using N₂ or air. Further, CO₂ is a naturally occurring, abundant gas. For these reasons, CO₂ is ideal for mixing with CF₃I in terms of its interrupting performance and industrial availability.

The insulating gas of the present invention contains CF₃I at a. pressure ratio of 15% or more, and more preferably at a pressure ratio of 20% or more. The interrupting performance is enhanced in this range.

More preferably, the insulating gas of the present invention contains CF₃I at a pressure ratio of 40% or more. The dielectric strength is enhanced in this range. The insulating gas must also have a dielectric strength high enough to withstand a high transient recovery voltage, such as BTF interruption. A 6:4 mixture of CF₃I : air has a substantially equivalent V-t characteristic to SF₆ gas (Hiroyuki Toyoda, Shigenori Matsuoka, Kunihiko Hidaka, Measurement of V-t characteristics of CF3I-N2, CF3I-Air mixed gases using acute square wave high voltage, DENGAKURON A, Vol. 125, No. 5, p409-414 (2005)). Since the dielectric strength of CO₂ is equivalent to or higher than that of air, a CF₃I-CO₂ mixed gas has a dielectric strength similar to SF₆ gas when the mixing ratio of CF₃I is from about 40 to 60%. Thus, the dielectric strength of the insulating gas can be increased when the pressure ratio of CF₃I is 40% or more.

More preferably, the insulating gas of the present invention contains CF₃I at a pressure ratio of 0.2 MPa or less, and more preferably at a partial pressure of 0.1 MPa or less. Since CF₃I has a boiling point of -4°C at 0.2 MPa and -22.5°C at 0.1 MPa, the insulating gas is kept from liquefying in this partial pressure range. When the total pressure in the gas insulated switchgear or the gas circuit breaker is a typical value of 0.5 MPa, a pressure ratio of CF₃I of 40% is equivalent to a partial pressure of CF₃I of 0.2 MPa, at which CF₃I has a boiling point of -4°C, and a pressure ratio of CF₃I of 20% is equivalent to a partial pressure of CF₃I of 0.1 MPa, at which CF₃I has a boiling point of -22.5°C.

A CF₃I-CO₂ mixed gas containing about 40% of CF₃I is particularly suitable for use as an SF₆-substituent gas in a gas insulated switchgear or a gas circuit breaker in terms of SLF-interrupting performance, BTF-interrupting performance, and boiling point.

CF₃I-CO₂ mixed gases were analyzed for their interrupting performance. The results are described in the following.

### (Experimental setup)

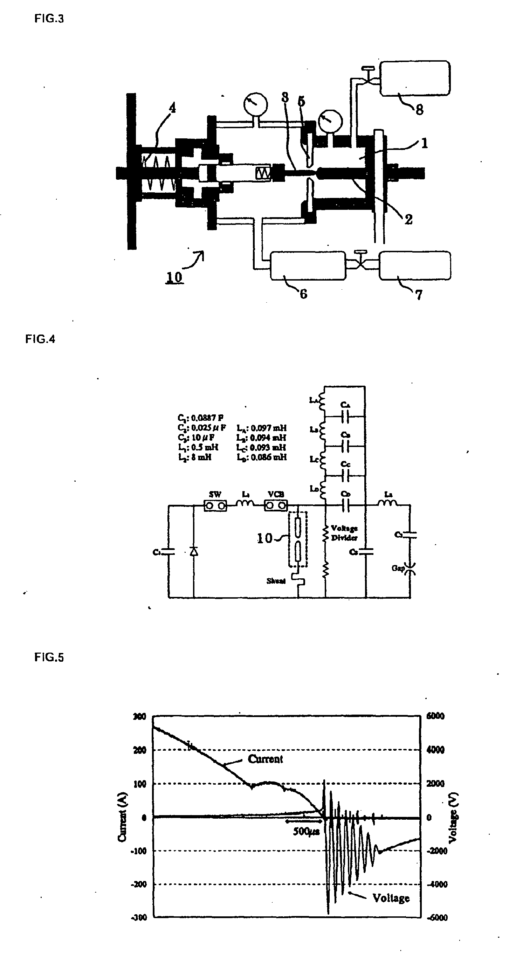

An experimental setup is shown in Fig. 3. The setup 10 is provided a model of an arc-quenching chamber of a gas circuit breaker. A static contactor 2 and a movable contactor 3 come into contact in an upstream container 1, causing the movable contactor 3 to connect to a spring. The contact between the static contactor 2 and the movable contactor 3 is located upstream of a nozzle 5 that separates the upstream container. The upstream container 1 is evacuated by a vacuum tank 6 and a vacuum pump 7 arranged downstream. A sample gas is then fed to the upstream container 1 from a reserve tank 8 arranged upstream to cause the spring 4 to move the movable contactor 3 downstream. As the movable contactor 3 moves to the outside of the nozzle 5, the gas flows into the nozzle 5. The pressure in the upstream container 1 is maintained at a predetermined pressure that forces the gas to flow at the speed of sound. The movable contactor 3 has a stroke of 20 mm so that the tip of the movable contactor 3 is positioned 10 mm from the outer surface of the nozzle 5 when the opening operation is complete. The nozzle 5 is made of polytetrafluoroethylene (PTFE) and has a throat diameter of 5 mm and a total length of 10 mm. The static contactor 2 and the movable contactor 3 are each made of an alloy composed of 20% Cu and 80% W and have lengths of 4 mm and 7 mm, respectively.

### (Sample gas)

A CF₃I gas and a mixed gas of CF₃I and CO₂ were used as sample gases.

### (Experimental circuit)

An experimental circuit integrating the experimental setup 10 is shown in Fig. 4. In this experiment, L_{A} through L_{D} and C_{A} through C_{D} of the SLF simulation circuit were adjusted to give surge impedances Z of 300 and 450 Ohms. In the current superpose test circuit shown in Fig. 4, the charge voltage of C₁ and the charge voltage of C₃ were varied to determine the limit values for the success or failure of interruption. Each gas was blown at a pressure of 0.2 MPa. The movable contactor was opened near the peak value of the discharge current generated by C₁ and L₁. The gap was closed near the zero-current point. This caused the high frequency current generated by C₃ and L₂ to be superposed on the discharge current to give a waveform as shown in Fig. 5. This state was assigned as "success" of interruption. If the current was not interrupted and the negative current continuously flowed, that state was assigned as "failure" of interruption. These waveforms were used to determine the rate of change in the current (di/dt) and the rate of change in the voltage (dv/dt) near the zero-current point, i.e., slope of the current and the voltage near the zero-current point. In this experiment, the frequency and the peak value of the current were adjusted and the rate of change in the current as well as the rate of change in the voltage was varied to determine the limit values for the success or failure of interruption and to thus evaluate the interrupting performance.

### (Results)

### (SLF-interrupting performance of CF₃I gas)

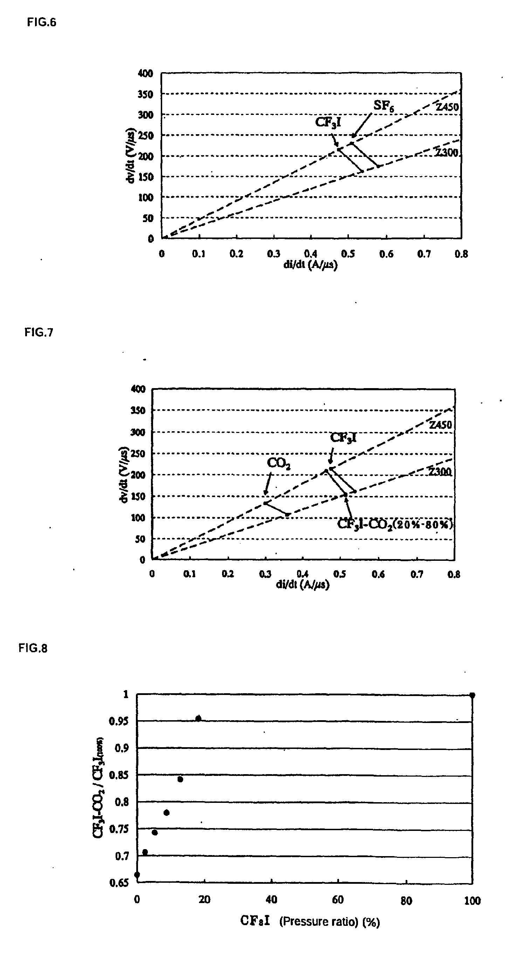

Fig. 6 shows the di/dt-dv/dt characteris-tics of CF₃I gas at a blow pressure of 0.2 MPa. The curve (shown by solid line) in the figure indicates the boundary between the success and failure of interruption. The area to the left of and below the curve represents success in interruption. The area to the right of and above the curve represents failure in interruption.

At 0.2 MPa, the boundary for CF₃I gas is positioned to the left of and below the di/dt-dv/dt characteristic curve for SF₆ gas. This suggests that CF₃I gas has lower interrupting performance than SF₆ gas. When their performance was compared for the same surge impedance, however, CF₃I gas has approximately 0.9 times as high a performance as SF₆ gas, indicating that CF₃I has less but equally favorable interrupting performance as compared to SF₆ gas. Of the many gases we have examined thus far, no gas has showed interrupting performance so close to SF₆ gas.

### (SLF-interrupting performance of CF₃I-CO₂ mixed gas)

Fig. 7 shows the di/dt-dv/dt characteristics of CF₃I-CO₂ mixed gas containing CF₃I at a pressure ratio of 20%. For comparison, the di/dt-dv/dt characteristics of CO₂ and CF₃I are also shown in Fig. 7. The CF₃I-CO₂ mixed gas showed SLF-interrupting performance close to pure CF₃I. The observation that the CF₃I-CO₂ mixed gas, which contained CF₃I and CO₂ at a ratio of 2: 8, showed SLF-interrupting performance close to pure CF₃I suggests that the interrupting performance of the mixed gas changes nonlinearly.

Next, the SLF-interrupting performance of CF₃I-CO₂ mixed gas was examined by varying the mixing ratio of CF₃I. Fig. 8 shows the changes in the SLF-interrupting performance of a CF₃I-CO₂ mixed gas when the ratio of CF₃I is varied at a surge impedance of 300 Ohms. In Fig. 8, the ratio of the SLF-interrupting performance of pure CF₃I gas to that of the CF₃I-CO₂ mixed gas in which the mixed ratio of CF₃I gas is varied is shown. The blow pressure is 0.2 MPa in each case.

When the proportion of CF₃I gas is in the range of about 0 to 15% as measured in pressure ratio, the SLF-interrupting performance changes almost linearly as the proportion of CF₃I increases. However, when the proportion of CF₃I gas is in the range of about 15 to 20% as measured in pressure ratio, the SLF-interrupting performance increased rapidly, indicating that CF₃I-CO₂ mixed gas has high SLF-interrupting performance comparable to pure CF₃I gas in this range.

While each of the above-described experiments was conducted at 0.2 MPa, it is expected that similar results will be obtained under different pressure conditions. Typically, gas insulated switchgears and gas circuit breakers are operated using SF₆ gas at a pressure of 0.5 MPa. If a CF₃I-CO₂ mixed gas containing CF₃I and CO₂ at a pressure ratio of 2:8 has a pressure of 0.5 MPa, then the gas should contain CF₃I and at partial pressures of 0.1 MPa and 0.4 MPa, respectively, in order to achieve the required interrupting performance. Since CF₃I gas has a boiling point of -22.5°C at 0.1 MPa, such a mixed gas can be used in gas insulated switchgears and gas circuit breakers.

The results of these experiments revealed the following facts:
(1) The SLF-interrupting performance of CF₃I gas is approximately 0.9 times as high as that of SF₆ gas, a substantially equivalent performance.
(2) The SLF-interrupting performance of CF₃I-CO₂ mixed gas containing 15% or more CF₃I is substantially equivalent to that of pure CF₃I gas.

As set forth, CF₃I gas has excellent interrupting performance, which can be further enhanced by mixing it with CO₂ to lower its filling pressure and, thus, the boiling point. Accordingly, by mixing with CO₂ at the above-described mixing ratio, CF₃I gas can be used as an effective substitute for SF₆ gas in gas insulated switchgears as well as in gas circuit breakers. Such gas insulated switchgears or gas circuit breakers cause reduced environmental load while achieving high dielectric strength and excellent interrupting performance.

## Claims

1. A gas insulated switchgear, comprising a switchgear housed in a container filled with an insulating gas, wherein the insulating gas contains CF₃I and CO₂ with CF₃I present at a pressure ratio of 15% or more.

2. The gas insulated switchgear according to claim 1, wherein CF₃I is present at a pressure ratio of 40% or more.

3. The gas insulated switchgear according to claim 1 or 2, wherein CF₃I is present at a partial pressure of 0.2 MPa or less

4. A gas circuit breaker that uses an insulating gas for interrupting a current path, wherein the insulating gas contains CF₃I and CO₂ with CF₃I present at a pressure ratio of 15% or more.

5. The gas circuit breaker according to claim 4, wherein CF₃I is present at a pressure ratio of 40% or more.

6. The gas circuit breaker according to claim 4 or 5, wherein CF₃I is present at a partial pressure of 0.2 MPa or less.
